(19) 
**Europäisches Patentamt**
**European Patent Office**
**Office européen des brevets**

(11) **EP 2 315 075 A1**

(12) **EUROPEAN PATENT APPLICATION**

(43) Date of publication:
**27.04.2011 Bulletin 2011/17**

(51) Int Cl.:
***G03B 37/04*** (2006.01)   ***H04N 5/262*** (2006.01)
***G06T 3/40*** (2006.01)

(21) Application number: **10177086.5**

(22) Date of filing: **16.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **22.10.2009 US 603862**
**13.07.2010 KR 20100067335**

(71) Applicant: **SAMSUNG ELECTRONICS CO., LTD.**
**Suwon-si**
**Gyeonggi-do 442-742 (KR)**

(72) Inventors:
• **Shenhav, Tom Yakir**
**442-742, Gyeonggi-do (KR)**
• **Cohn, Alex**
**442-742, Gyeonggi-do (KR)**

(74) Representative: **Jenkins, Richard Gavin**
**Harrison Goddard Foote**
**106 Micklegate**
**York YO1 6JX (GB)**

(54) **Method for Navigation in Panoramic Image, Machine-Readable Storage and Portable Device**

(57)    A method for navigation in a panoramic image in a portable device is provided, which includes rendering a preview of the panoramic image that provides 3 degree of freedoms on a virtual cylinder.

FIG.4

EP 2 315 075 A1

## Description

## BACKGROUND OF THE INVENTION

1. Field of the Invention

The present invention relates to a method and apparatus for displaying an image, and more particularly to a method and apparatus for displaying a panoramic image.

2. Background to the Invention

In general, panoramic photographs or images are imaged having a wide angle or a field of view greater than that of a human body. The panoramic images model the world around an observer as being projected on a virtual cylindrical screen. The panoramic images are not intended to be viewed as a whole in one glance, but are intended to be viewed as if through a window of a limited width. Special software or a program is required to release a warp using a reverse cylinder transform and to provide a view (or appearance) of the panoramic image. For example, a user can generate one panoramic image in a manner that the user takes photographs of surrounding backgrounds in four directions of north, south, east and west in the original place, and the software stitches the four images together. An immersive user experience cannot be achieved with a single static view, as the panorama must be live, smoothly responding to change of the view direction.

Conventional methods do not resolve the problem of a preview of a panoramic image, to allow an end-user to decide if the user wants to be immersed into a specific panorama. With hard copy (print), there is a workaround, that is, to display the unwarped image as a whole. However, such an approach is acceptable on a large screen, but is not relevant for small screens, such as used in mobile devices, because for a wide panorama only a small portion of the screen can be used. These background topics are discussed, for instance, in Panoramic vision: sensors, theory, and applications, by Ryad Benosman, Sing Bing Kang, Olivier Faugeras. Contributor Olivier Faugeras, Springes 2001, ISBN 0387951113, 9780387951119.

## SUMMARY OF THE INVENTION

Accordingly, the present invention has been made to at least partly solve, reduce, or remove at least one of the above-mentioned problems and/or drawbacks related to the prior art.

The present invention provides a method and apparatus that can effectively provide a preview of a panoramic image on a small screen included in a portable device.

In one aspect of the present invention, there is provided a method for navigating through a panoramic image in a portable device, which includes rendering a preview of a panoramic image, which provides 3 degrees of freedom related to a panning angle, ascent (or altitude) on a virtual cylindrical screen (cylinder), and a distance from the center axis (or center) of the cylinder.

Preferably, a user can adjust the panning angle and the ascent to find a better viewing point.

Preferably, the cylinder can rotate in the range of 0° to 360° and the panning angle is not limited.

Preferably, an immersion view of the cylinder from the inside of the cylinder is provided from a center axis of the cylinder.

Preferably, a discontinuous switchover between a bird's eye view and a view from the inside of the cylinder is caused to look smooth and natural with respect to the panoramic image, and this is performed by:

(a) defining a distance coordinate;
(b) preserving the panning angle so that a portion of the image in the center of the cylinder does not move, the field of view grows wider with distance and the sizes of objects in the panoramic image grow smaller; and
(c) selecting the switch point so that the field of view is almost the same for the bird's eye view and the immersion view.

Preferably, for a bird's eye view, the cylinder is defined as a set of identical ellipse rings of 1 pixel height, and the pixel of the original panoramic image that corresponds to each pixel of the ring is found and mapped, thereby allowing to perform the projection calculations on a mobile device in real time to allow smooth rendering of the changing scene in response to user interaction via touch screen, keyboard, and accelerometer (or acceleration sensor).

Preferably, the whole width of the panoramic image is mapped onto an arc of a circle, the radius of which is proportional to the distance dimension. In another embodiment of the present invention, the reverse cylinder projection is approximated by iterative fixed-point calculation.

The present invention is further directed to a portable device, typically but not solely a cellular phone, comprising software suitable to operation the method of the invention.

## BRIEF DESCRIPTION OF THE DRAWINGS

The above and other aspects, features and advantages of the present invention will be more apparent from the following detailed description taken in conjunction with the accompanying drawings, in which:

Fig. 1 is a view schematically illustrating the configuration of a portable device that displays a panoramic image according to a preferred embodiment of the present invention;

Fig. 2 shows a panoramic sketch used to illustrate the invention;

Fig. 3 is a view of a small part of the panoramic image of FIG. 1;

Fig. 4 is a preview of a panoramic image;

Fig. 5 shows a bird's eye view of the cylinder on which the image is disposed from the outside;

Fig. 6 illustrates the adjustment of a panning angle and ascent;

Fig. 7 is a bird's eye view from the highest ascent;

Fig. 8 is a bird's eye view from the lowest ascent;

Fig. 9 is a detailed preview with reduced field of view;

Fig. 10 illustrates the geometric model of changing the distance, in which for a closer look, ascent is more limited;

Fig. 11 illustrates the switching to view from the inside;

Fig. 12 shows the view from the inside. With this scaling, panning is possible to left or right;

Fig. 13 is a zoom into a small portion of panorama, and the arrows show the direction of possible panning; and

Fig. 14 illustrates the use of a distance coordinate.

## DESCRIPTION OF EMBODIMENTS OF THE INVENTION

Hereinafter, exemplary embodiments of the present invention will be described with reference to the accompanying drawings. In the following description, the same elements will be designated by the same reference numerals although they are shown in different drawings. Further, various specific definitions found in the following description, such as specific values of packet identifications, contents of displayed information, etc., are provided only to help general understanding of the present invention, and it is apparent to those skilled in the art that the present invention can be implemented without such definitions. Further, in the following description of the present invention, a detailed description of known functions and configurations incorporated herein will be omitted when it may make the subject matter of the present invention rather unclear.

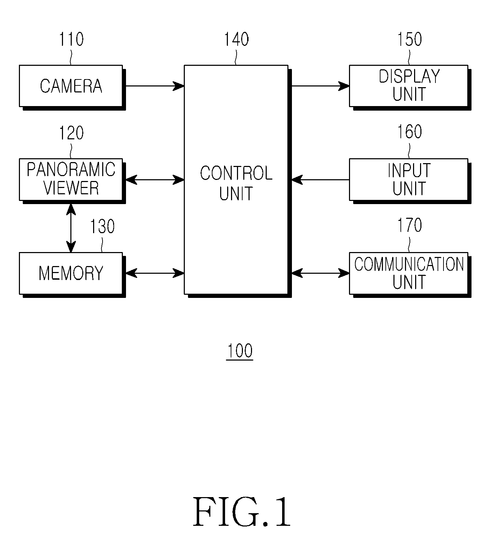

Fig. 1 is a view schematically illustrating the configuration of a portable device (e.g. a portable communication terminal such as a cellular phone) that displays a panoramic image according to a preferred embodiment of the present invention.

The portable device 100 may include a camera 110, a panoramic viewer 120, a memory 130, a display unit 150, an input unit 160, a communication unit 170, and a control unit 140. Although a schematic configuration of the portable device 100 is illustrated in Fig. 1, the portable device 100 may further include a speaker, a microphone, and the like.

The camera 110 forms an optical image of an object, and detects the formed optical image as an electric signal (i.e. electric image). For this, although not illustrated, the camera 110 may include a lens system that is provided with at least one lens to form the image of the object, and image sensors such as a CCD (Charge-Coupled Device) image sensor detecting an image formed by the lens system as an electric signal, a CMOS (Complementary Metal Oxide Semiconductor) image sensor, and the like.

The panorama viewer 120 generates a preview or an immersion view of the panoramic image, and outputs the generated preview (e.g. bird's eye view) or immersion view to the control unit or the display unit.

The memory 160 may store images for providing applications having diverse functions such as a game and the like and graphic user interface (GUI) related to the applications, data bases related to user information and documents, background images (menu screen, standby screen, and the like) required to drive the portable device 100, or operating programs.

The display unit 150 displays images input from the control unit 140, the camera 1110, the panoramic viewer 120, or the memory 130. The display unit 150 may use a liquid crystal display (LCD), a touch screen, and the like. The touch screen displays an image according to the control of the control unit 140, generates a key contact interrupt when a user input means, such as a finger, a stylus pen, or the like, comes in contact with the surface of the touch screen, and outputs the user input information including input coordinates and input status to the control unit 140 under the control of the control unit 140.

The input unit 160 receives and outputs the user input or command to the control unit, and includes a user input device or interface such as a keypad, an accelerometer.

The communication unit 170 receives a radio downstream signal in the air using an antenna, and outputs downstream data, which is obtained by demodulating the radio downstream signal, to the control unit 140. Also, the communication unit 170 generates a radio upstream signal by modulating the upstream data input from the control unit 140, and wirelessly transmits the generated radio upstream signal in the air using the antenna. Such modulation and demodulation may be performed preferably according to a CDMA (Code Division Multiple Access) system or may be performed by a FDM (Frequency Division Multiplexing) system or TDM (Time Division Multiplexing) system.

The control unit 140 executes an application according to the user input information, and the application performs a program operation according to the user input information. The control unit 140 controls the whole operation of the portable device. In this case, the user input includes an input through the keypad, touch screen, or the like, or a camera-based input.

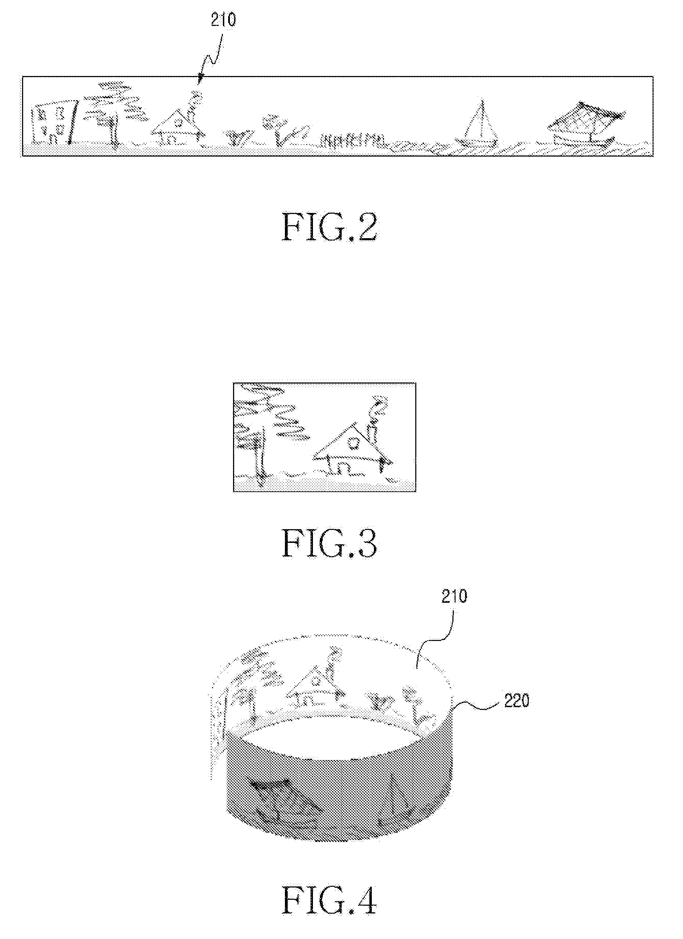

Fig. 2 shows a panoramic sketch (i.e. panoramic image) used to illustrate the invention, and Fig. 3 displays a view of a part of the panoramic image illustrated in Fig. 2.

The panoramic image 210 may be pre-stored in the memory 130, or may be generated by combining the original images stored in the memory 130. The original images or the panoramic image may be acquired by the camera 110 or the communication unit 170.

For example, in order to generate the panoramic image 210, the panoramic viewer 120 discriminates duplicate areas between the neighboring original images from the original images (e.g. first to fourth original images according to north, south, east and west directions) stored in the memory 130, removes the duplicate areas (typical cropping process), and generates one panoramic image 210 by connecting in order the cropped original images (typical combining or stitching process). Such panoramic image generation methods, for example, are well known in the related art such as disclosed in Japanese Patent Application No. 2003-038774 and Korean Patent Application No. 2004-0098194, and thus the detailed description thereof will be omitted.

Fig. 4 shows a preview of a panoramic image 210.

The panoramic image 210 may be considered as a two-dimensional image projected (or displayed) on a virtual flat screen, and a preview image may be considered as a three-dimensional image projected (or displayed) on a virtual hollow cylinder screen.

A process that forms a preview image on the virtual cylinder screen (hereinafter also referred to as a "cylinder") corresponds to a typical texture mapping process. That is, the panoramic viewer 120 generates a preview image by setting the virtual cylinder 220 and rendering the panoramic image 210 on the inner surface of the cylinder 220. In the present invention, the cylinder is pointedly called a generally circular cross section, a generally elliptical cross section or the like in the vertical direction (i.e. the cross section cut in the diameter direction, and a part thereof is in an open or completely closed state.

According to the method of the present invention, the preview of the panoramic image is rendered on a cylinder 220 viewed from outside as a bird's eye view as illustrated in Fig. 4. As illustrated in Fig. 4, since the virtual cylinder 220 is transparently processed, a user can view the panoramic image 210 reflected on the outer surface of the cylinder 220. Unlike this, a portion of the panoramic image 210 that is hidden by the cylinder 220 may be processed so that a user cannot view the portion.

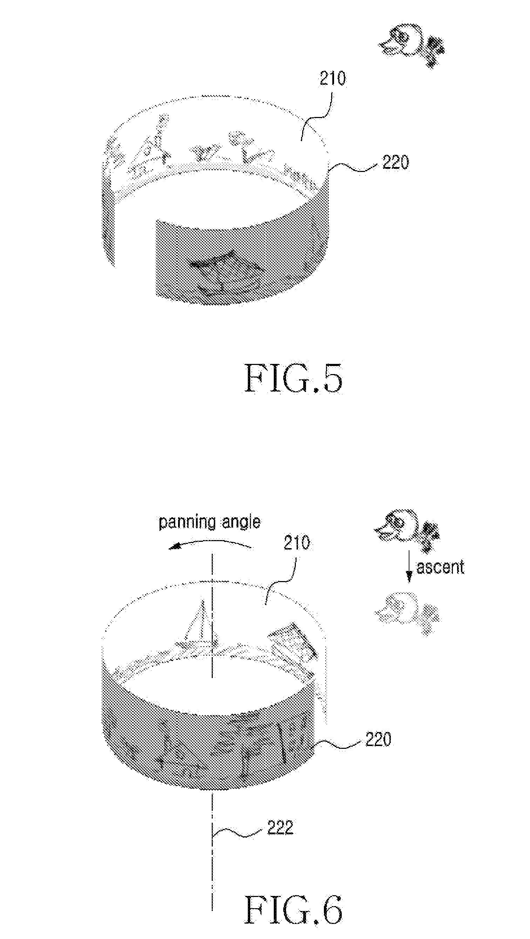

Fig. 5 shows a bird's eye view of the cylinder on which the image is disposed from the outside, and Fig. 6 illustrates the adjustment of a panning angle and a height or an ascent.

Referring to Fig. 5, a bird is an observer of the panoramic image 210, and Fig. 5 shows that the observer observes the panoramic image 210 from the outside of the cylinder 220. In the present invention, the "ascent" means the ascent of the observer based on the panoramic image 210 or the cylinder 220, and at this time, the position of the lower end, upper end or the intermediate position between the lower end and the upper end of the cylinder may be the reference with respect to the center axis (e.g. the rotating axis or symmetric axis) of the cylinder. In the virtual space in which the panoramic image is arranged, the observer corresponds to a user. The center position (the intermediate position between the upper end and the lower end) on the center axis becomes the center of the cylinder 220. The view direction of the observer may be directed toward the center of the cylinder 220.

The preview of the panoramic image 210 provides 3 degrees of freedom: the panning angle , ascent (or altitude), and a distance from the center (or center axis) of the cylinder. The degrees of freedom , as further clearly described in the following description, permits to provide an image that is "live".

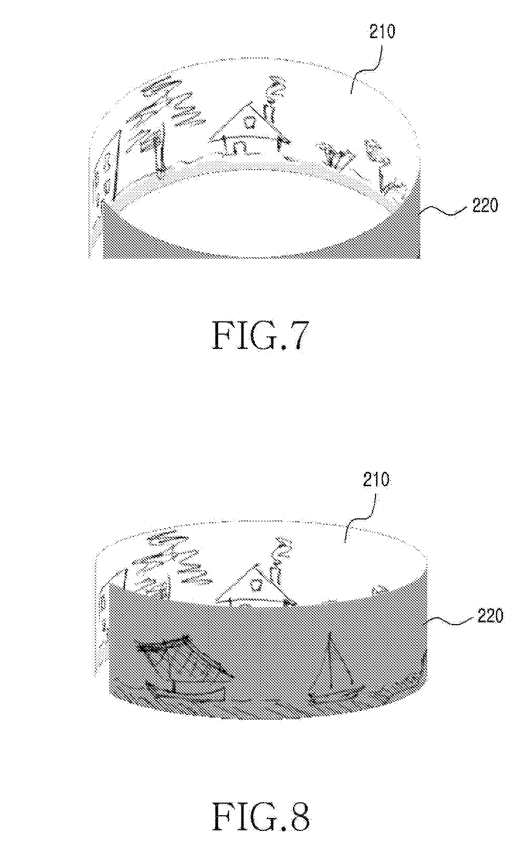

Fig. 7 is a bird's eye view from the highest ascent, and Fig. 8 is a bird's eye view from the lowest ascent. Fig. 7 shows the bird's eye view of the panoramic image 210 when the observer is positioned at the highest ascent, and Fig. 8 shows the bird's eye view of the panoramic image 210 when the observer is positioned at the lowest ascent in the bird's eye view. In Fig. 8, based on the center axis of the cylinder 220, the minimum ascent of the observer in the bird's eye view is higher than the ascent of the upper end of the cylinder 220. The scent of the observer is limited by the ascent of the cylinder 220 and the distance from the cylinder 220.

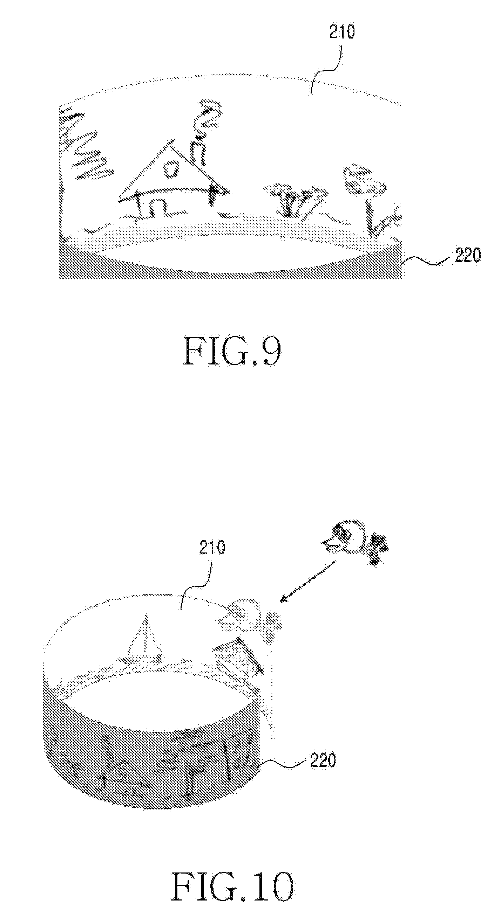

Fig. 9 is a detailed preview with reduced field of view, and Fig. 10 illustrates the geometric model of changing the distance. In a closer look or close-up mode, the ascent is further limited. Hereinafter, although the close-up in the bird's eye view and a zoom-in in the immersion view are discriminated from each other for convenience, both of them are common in enlarging and viewing the panoramic image.

A user may perform the close-up to view the more detailed portion as shown in Figs. 9 and 10. Fig. 10 illustrates the position movement of the observer when the mode is shifted from a general mode to a close-up mode. For example, when the mode is shifted from the general mode to the close-up mode, the observer may move from the position that corresponds to the highest ascent and maximum distance to the position that corresponds to the lower ascent and shorter distance (which is shorter than the maximum distance, but is positioned on the outer side of the cylinder 220). Referring to Fig. 9, when the mode is shifted from the general mode to the close-sup mode, the visual field of the observer (i.e. the user) or the field of view of the panoramic image 210 is reduced.

According to the present invention , the user can adjust the panning angle and the ascent to find a better viewing point. The cylinder can process a certain rotation in the range of 0° to 360° without limiting the panning angle. The effect of adjusting the ascent is as illustrated in Figs. 7 and 8.

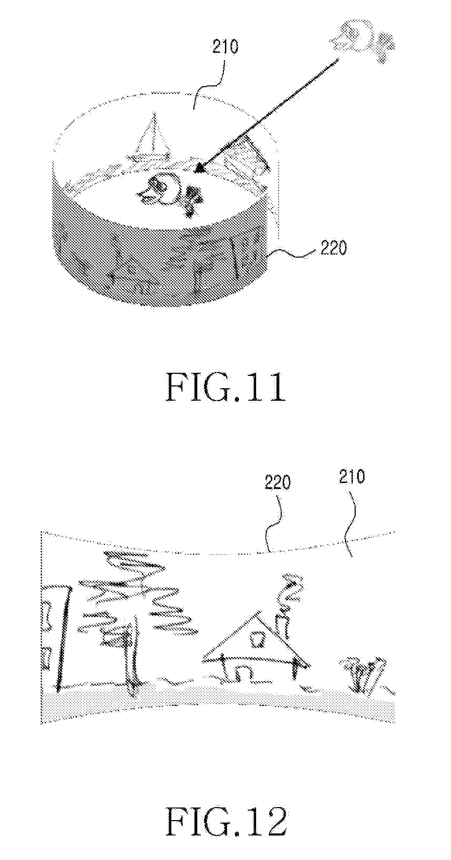

Fig. 11 illustrates the switchover to the view from the inside, and Fig. 12 shows the view from the inside. With this scaling, panning to the left or right becomes possible. Fig. 11 shows the position movement of the observer when the mode is shifted from the general mode to the immersion view mode. For example, when the mode is shifted from the general mode to the immersion view mode, the observer can move from the position that corresponds to the highest ascent and the maximum distance to the center of the cylinder 220. Referring to Fig. 12, when the mode is shifted from the general mode to the immersion view mode, the visual field of the observer (i.e. the user) or the field of view of the panoramic image 210 is reduced.

According to the present invention, as illustrated in Figs. 11 and 12, a more traditional immersion view of the panoramic image 210 can also be provided from the center of the cylinder 220. From this view, the 3 degrees of freedom are also provided.

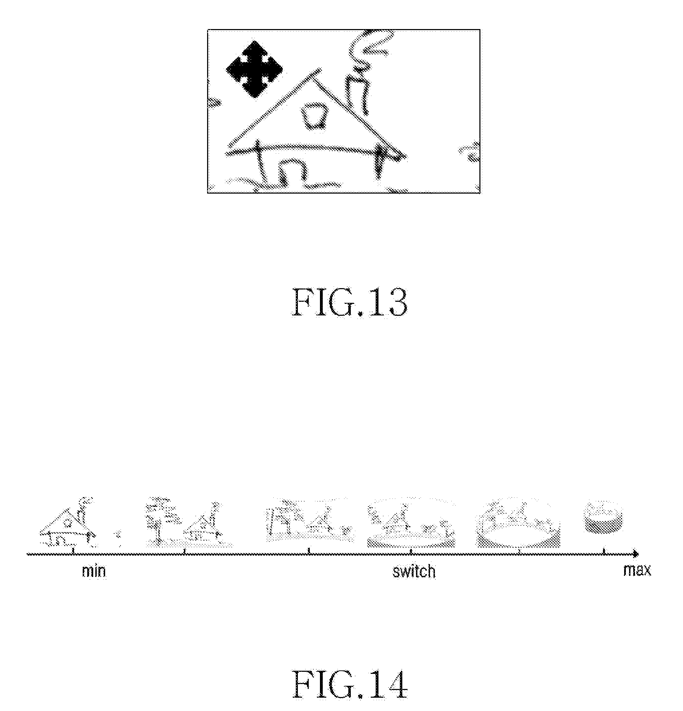

Fig. 13 shows the result of zoom-in (i.e. expanded) into a small portion of a panoramic image in an immersion view mode. That is, in the immersion view mode, the zoom-in and zoom-out (i.e. reduction) are possible.

Figs. 12 and 13 show views in the immersion view mode. Since Fig. 12 shows an upper end and a lower end of the cylinder 220, the panning in the vertical direction may not be permitted in the scale of Fig. 12. Since the upper end and the lower end of the cylinder 220 are not shown in Fig. 12, not only the panning in the horizontal direction but also the panning in the vertical direction can be permitted in the scale of Fig. 13. As shown in Fig. 13, the zoom-in level defines the size of a field of view. In Fig. 13, four arrows indicate two panning dimensions, horizontal and vertical directions. Based on the intermediate position (or upper end or lower end position) of the lower end and the upper end of the panoramic image 210, the panning in the vertical direction can be numeralized by a vertical offset. For example, the intermediate position is set to "0", and the view intermediate position according to the panning in the upward or downward direction is numeralized as (+) value or (-) value. The horizontal offset, such as the panning of the bird's eye view, angle, and the like, corresponds to the rotation of the cylinder 220. Based on the intermediate position (or left end or right end position) of the left end and the right end of the panoramic image 210, the panning in the horizontal direction can be numeralized by a horizontal offset (or panning angle). For example, the intermediate position may be set to "0", and the view intermediate position according to the panning in the left or right direction may be numeralized as (+) value or (-) value. For example, the left end and the right end can be set to 0° to 360°, respectively In the panoramic image 210 as illustrated in Fig. 2, the left end and the right end can be set from the direction of viewing the paper.

Fig. 14 illustrates the use of a distance coordinate. Switchover between the bird's eye view and the view from inside is discontinuous, but for the user this transition looks smooth and natural. This is achieved by defining a distance coordinate, as illustrated in Fig. 14.

The transition preserves the panning angle, and thus the part of the panoramic image 210 in the center of the screen does not move. The field of view grows wider with distance, and the sizes of objects (e.g. house, tree, and the like) in the panoramic image 210 grow smaller. The switch point is selected so that the field of view is almost the same for the bird's view and the immersion view as can be seen when comparing Fig. 8 and Fig. 11.

It should be noted that near the switch point the vertical offset and the ascent are fixed, and the user has more freedom of adjusting the third dimension as the distance increases or decreases.

The method of the invention is compatible with the different man-machine interfaces. However, in order to achieve an immersive user experience, it is essential to reveal the live nature of the panorama. A panorama should display continuous movement. The best results are achieved if the tilt sensor is used to translate a gentle pitch of the portable device 100 to a panning command for the panoramic viewer 12 (rotation of the cylinder). The dependence between speed of rotation and the tilt angle can be made linear for simplicity, according to one embodiment of the invention. For example, if it is assumed that the vertical axis of the portable device 100 is perpendicular to the paper, the rotation (i.e. tilting) of the portable device 100 around the horizontal axis of the portable terminal 100 (e.g. the hinge axis of the folder type portable phone) may be mapped onto the vertical panning command, and the rotation (i.e. tilting) of the portable device 100 around the vertical axis of the portable terminal 100 may be mapped onto the horizontal panning command. In a touch screen, the cylinder 220 must correctly respond to a drag. The process must differentiate between vertical motion and rotation. The vertical drag affects the ascent (for bird's eye view) or vertical offset, within the limits defined by current distance. In this drag, the rotation speed may be adjusted so that the finger (or pointing device) is fixed to the same object in the panoramic image 210.

The touch screen interaction preferably, but not limitatively, supports flick effect: high-speed rotation continues after the finger is detached from the surface of the touch screen. In one embodiment of the invention, the rotation slows down gradually, using a linear friction model. The panoramic viewer 120 does not react on the accelerometer (input from the accelerometer) while it performs the flick rotation.

In one embodiment of the invention, the input unit that is the user interface also accepts keyboard events. By way of illustration, it may respond to a left or right arrow key press with one-step rotation of the cylinder 220, and it may change the ascent or vertical offset one step when an up or down key is pressed. The "+" and "-" keys (or volume keys on mobile devices) can be conveniently used to navigate the distance dimension.

An important aspect of the invention is the ability to perform the projection calculations on a portable device such as a mobile terminal in real time to allow smooth rendering of the changing scene in response to user interaction via touch screen, keyboard, and accelerometer. Accordingly, the present invention, contrary to methods of the prior art, does not use a 3-dimensional perspective model of the cylinder (for the bird's eye view). The cylinder 220 is instead defined as a set of identical ellipse rings of 1 pixel height, and the pixel of the original panoramic image 210 that corresponds to each pixel of the ring is found.

The whole width of the panoramic image 210 is mapped onto an arc of a circle. The radius of this circle is proportional to the distance dimension. As illustrated in Fig. 12, the illustrated portion of the panoramic image 210 in the immersion view appears to be recessed. For instance, for images produced by stitching planar still photos with standard 4x3 aspect ratio, the angle of the arc is determined by the following Equation (1) that is an approximate formula.

$$\varphi = 1.13 * a \quad \ldots \ldots (1)$$

Here, $\alpha$ is the aspect ratio of the panoramic image 210 (width to height ratio), and 1.13 is a factor that accounts for the focal length of the camera 110, the size of the original frame (e.g. flat still photo), and cropping which is a part of the stitching process.

The formulae and the geometrical model allow to perform the time point transform using the fixed-point arithmetic, which is faster than floating point calculation by a factor of four, in one embodiment of the invention. To further reduce rendering time, the pixel data may use nearest neighbor information, but the edges of the cylinder should be anti-aliased against the background, to provide a more realistic look.

For immersive view, according to another embodiment of the invention, the reverse cylinder projection is approximated by iterative fixed-point calculation. Again, anti-aliasing can be performed on the curved edges, but typically this is not done for the pixels inside the view, although of course doing so would not exceed the scope of the invention.

As will be apparent to those skilled in the art, the performance of the process according to the invention can be improved by carefully optimizing a C library, referred to herein as "PxViewer". The library should be designed to provide the application with methods to render a given image in either immersive or bird's eye-view, according to the methods described above. The library should accept key, touch, and slope events, to change the image rendering. The choice between immersive and bird's-view is made by the PxViewer library, and the user interface events (such as slope and touch) are interpreted according to the current view state, zoom and position. To start working with the library, the application calls pxv init() method, which returns an instance of the PxVeiwer object. The events and rendering requests are passed to this instance, and the application receives the rendered image in RGB or TIN format, ready for immediate display on the screen (i.e. display unit 150) of mobile device. The PxVeiwer object, application interlocking with the object, or PxVeiwer library may correspond to the panoramic viewer 120 as illustrated in Fig. 1.

As will be appreciated by those skilled in the art, different types of PxVeiwer libraries can be developed to streamline the process, which are within the scope of the routineer and are therefore not discussed herein in detail, for the sake of brevity.

In the description above, although all of the components of the embodiments of the present disclosure may have been explained as assembled or operatively connected as a unit, the present disclosure is not intended to limit itself to such embodiments. Rather, within the objective scope of the present disclosure, the respective components may be selectively and operatively combined in any numbers. Also, every one of the components may be implemented by itself in hardware while the respective ones can be combined in part or as a whole selectively and implemented in a computer program having program modules for executing functions of the hardware equivalents. Codes or code segments to constitute such a program may be easily deduced by a person skilled in the art. The computer program may be stored in computer readable media, which in operation can realize the embodiments of the present disclosure. As the computer readable media, the candidates include magnetic recording media, optical recording media, and carrier wave media.

Also, terms like "include", "comprise", and "have" should be interpreted in default as inclusive or open rather than exclusive or closed unless expressly defined to the contrary. All the terms that are technical, scientific or otherwise agree with the meanings as understood by a person skilled in the art unless defined to the contrary. Common terms as found in dictionaries should be interpreted in the context of the related technical writings not too ideally or impractically unless the present disclosure expressly defines them so.

The above description and examples have been provided for the purpose of illustration and the invention is not meant to be limited by them in any way. The invention encompasses all variations and alternatives without exclusion.

The method and apparatus for navigation in a panoramic image according to the present invention has the advantages in that it can effectively provide a preview of the panoramic image on a small screen included in the portable device.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for navigating through a panoramic image in a portable device, comprising the steps of rendering a preview of a panoramic image that provides 3 degrees of freedom on a virtual cylinder.

2. The method as claimed in claim 1, wherein the 3 degrees of freedom relate to a panning angle, an ascent, and a function of adjusting a distance from the center of the cylinder.

3. The method as claimed in claim 1, further comprising the step of providing an immersion view from the inside of the cylinder.

4. The method as claimed in claim 1, further comprising the step of performing switchover between a bird's eye view and a view from the inside of the cylinder with respect to the panoramic image;
   wherein in the switchover step, the panning angle is maintained so that the field of view is widened according to a distance and the size of an object in the panoramic image becomes smaller.

5. The method as claimed in claim 1, wherein the cylinder is defined as a set of equal elliptical rings of one pixel height, and corresponding pixels of the panoramic image are navigated and mapped onto respective pixels of the rings.

6. The method as claimed in claim 1, wherein the whole width of the panoramic image is mapped onto an arc of a circle.

7. The method as claimed in claim 6, wherein the radius of the arc is in proportion to the distance from the center of the cylinder.

8. The method as claimed in claim 7, wherein the angle of the arc is determined by the following equation,

$$\varphi = 1.13 * a$$

   where, $\alpha$ is an aspect ratio of the panoramic image.

9. A machine-readable storage device recorded with a program for executing a method for navigation in a panoramic image according to any 5 one of claims 1 to 8.

10. A portable device including a machine-readable storage device of claim 9.

FIG.1

FIG.2

FIG.3

FIG.4

210

220

## FIG.5

panning angle

210

ascent

220

222

## FIG.6

FIG.7

FIG.8

FIG.9

FIG.10

210

220

FIG.11

220    210

FIG.12

FIG.13

min                                           switch                    max

FIG.14

EP 2 315 075 A1

Europäisches
Patentamt
European
Patent Office
Office européen
des brevets

**EUROPEAN SEARCH REPORT**

Application Number

EP 10 17 7086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 132348 A (VSTONE KK; ISHIGURO HIROSHI) 9 May 2003 (2003-05-09) | 1,3,6,9, 10 | INV. G03B37/04 |
| Y | * abstract * * figures 6-15 * | 2,4,5,7, 8 | H04N5/262 G06T3/40 |
| Y | WO 98/47291 A2 (ISIGHT LTD [IL]) 22 October 1998 (1998-10-22) * page 32, line 13 - page 38, line 7 * * figures 13,14 * | 2,4,5 | |
| Y | US 2006/033999 A1 (LIU ZICHENG [US] ET AL) 16 February 2006 (2006-02-16) * paragraph [0070] - paragraph [0075] * | 7,8 | |
| A | US 2003/167466 A1 (NAKAMURA MASAKAZU [JP] ET AL) 4 September 2003 (2003-09-04) * paragraph [0058] - paragraph [0099] * * figures 9-12 * | 1 | |
| A | US 6 144 501 A (NALWA VISHVJIT SINGH [US]) 7 November 2000 (2000-11-07) * abstract * | 1 | |

TECHNICAL FIELDS
SEARCHED    (IPC)

G06T
H04N
G03B

The present search report has been drawn up for all claims

| Place of search | Date of completion of the search | Examiner |
|---|---|---|
| The Hague | 10 December 2010 | Breccia, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 17 7086

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2010

| Patent document cited in search report | | Publication date | Patent family member(s) | | Publication date |
|---|---|---|---|---|---|
| JP 2003132348 | A | 09-05-2003 | JP | 3641747 B2 | 27-04-2005 |
| WO 9847291 | A2 | 22-10-1998 | AU | 6515798 A | 11-11-1998 |
| US 2006033999 | A1 | 16-02-2006 | CN | 1477597 A | 25-02-2004 |
| | | | EP | 1376467 A2 | 02-01-2004 |
| | | | JP | 4279613 B2 | 17-06-2009 |
| | | | JP | 2004038973 A | 05-02-2004 |
| | | | KR | 20040002682 A | 07-01-2004 |
| | | | TW | 273511 B | 11-02-2007 |
| | | | US | 2004001146 A1 | 01-01-2004 |
| | | | US | 2006028735 A1 | 09-02-2006 |
| US 2003167466 | A1 | 04-09-2003 | CN | 1457593 A | 19-11-2003 |
| | | | EP | 1367822 A1 | 03-12-2003 |
| | | | WO | 02071743 A1 | 12-09-2002 |
| | | | JP | 4087252 B2 | 21-05-2008 |
| US 6144501 | A | 07-11-2000 | CA | 2276999 A1 | 28-02-2000 |
| | | | CN | 1247996 A | 22-03-2000 |
| | | | EP | 0982944 A1 | 01-03-2000 |
| | | | JP | 3386414 B2 | 17-03-2003 |
| | | | JP | 2000081674 A | 21-03-2000 |
| | | | KR | 20000017584 A | 25-03-2000 |
| | | | TW | 416248 B | 21-12-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003038774 A

- KR 20040098194

**Non-patent literature cited in the description**

- **Ryad Benosman ; Sing Bing Kang ; Olivier Faugeras.** Panoramic vision: sensors, theory, and applications. Springes, 2001